(19) Europäisches Patentamt
European Patent Office
Office européen des brevets

(11) **EP 1 227 337 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(51) Int Cl.7: **G01S 13/90**, G01S 7/41, G01S 13/93

(21) Anmeldenummer: **01124819.2**

(22) Anmeldetag: **18.10.2001**

(54) **Verfahren zur Drahterkennung auf der Basis des ROSAR-Systems**

Method of detection and recognition of cables based on the ROSAR system

Méthode de reconnaisance de câbles sur base du système ROSAR

(84) Benannte Vertragsstaaten:
**DE FR GB**

(30) Priorität: **18.01.2001 DE 10101990**

(43) Veröffentlichungstag der Anmeldung:
**31.07.2002 Patentblatt 2002/31**

(73) Patentinhaber: **EADS Deutschland GmbH**
**81663 München (DE)**

(72) Erfinder:
• **Klausing, Helmut, Dr.**
**82234 Hochstadt (DE)**
• **Kaltschmidt, Horst, Dr.**
**85579 Neubiberg (DE)**

(74) Vertreter: **Meel, Thomas**
**Patentassessor,**
**c/o Dornier GmbH**
**L H G**
**88039 Friedrichshafen (DE)**

(56) Entgegenhaltungen:
WO-A-99/46831    DE-C- 3 922 086
DE-C- 4 323 511    DE-C- 19 851 910
US-A- 4 737 788

**Beschreibung**

Die Erfindung bezieht sich auf ein Verfahren zur Drahterkennung für ein Radarsystem mit synthetischer Apertur durch rotierende Antennen (ROSAR) gemäß dem Anspruch 1.

Die größte Gefahr bei jedem Hubschrauberflug ist darin zu sehen, dass der Pilot ein quer zu seiner Flugbahn angeordnetes Drahthindernis übersieht, was zu schweren Unfällen bzw. zu Abstürzen führt. Dieses Risiko ist in erhöhtem Maße bei schlechtem Wetter, wie Regen, Nebel, Schneefall etc. gegeben. Die heutigen Systeme an Bord eines Hubschraubers sind reine Passiv-Systeme wie beispielsweise Restlichtverstärker, Wärmebildgeräte etc., die jedoch bei Nebel, Rauch und Niederschlägen wegen der geringen Reichweite nicht eingesetzt werden können. Aber auch die neuerdings eingesetzten optischen, elektrooptischen und auf Laserstrahlung basierenden Abbildungsverfahren können die Situation hinsichtlich der Detektion von Drahthindernissen bei schlechten Witterungsbedingungen, Nebel oder Rauch nicht wesentlich verbessern.

Aus der DE 39 22 086 und der DE 43 23 511 ist es bekannt, ein ROSAR-Gerät in Echtzeitnähe im Online-Betrieb einzusetzen, das neben der Kartographie, Minendetektion etc. auch der Hinderniswarnung dient. Die hierbei vorgesehene Drahtentdeckung durch Reflexionspunkte in verschiedenen Auflösungszellen aber setzt eine starke Dominanz der Drahtreflexionsquerschnitte innerhalb einer Auflösungszelle voraus. Ist diese Voraussetzung nicht gegeben, so könnte man zwar durch eine aufwendige Nachverarbeitung der ROSAR-Bilder eine Verbesserung der Drahterkennbarkeit erreichen, aber dieses Verfahren ist nicht nur - wie vorstehend erwähnt - aufwendig, sondern kann auch nicht als genügend sicher angesehen werden.

Der vorliegenden Erfindung liegt die Aufgabe zugrunde, ein Verfahren aufzuzeigen mit dem eine Drahterkennbarkeit auf der Basis einer ROSAR-Fokussierung nicht nur gewährleistet, sondern auch optimiert wird.

Diese Aufgabe wird durch die in Anspruch 1 aufgezeigten Maßnahmen gelöst. In den Unteransprüchen sind Weiterbildungen und Ausgestaltungen angegeben und nachfolgend wird an einem Ausführungsbeispiel das vorgeschlagene Verfahren beschrieben und erläutert. Die Figuren der Zeichnung ergänzen diese Erläuterungen. Es zeigen:

Fig. 1   ein Schemabild bezüglich verschiedener Lagen eines Drahtstückes in einem ROSAR-Entfernungsring bei Annäherung an diesen Ring, in schematischer Darstellung,

Fig. 2   ein Schemabild zur Verdeutlichung des Drahterkennungsprozesses,

Fig. 3   ein Schemabild zur Verdeutlichung des Drahterkennungsprozesses bei zwei verschieden geneigten Drähte mit ihren zugehörigen Linienauflösezellen.

Fig. 4   ein Schemabild zur Berechnung des Drahtreferenzsignals

Das ROSAR (Rotating Synthetic Aperture Radar) - also Radar mit synthetischer Apertur auf der Basis rotierender Antennen - hat das Potential, ein Drahthindernis bei schlechtem Wetter zu detektieren, wie schon experimentell gezeigt werden konnte. Das Problem aber besteht darin, dass die benutzte Wellenlänge in der Größenordnung des Durchmessers des zu erkennenden Drahthindernisses liegen muss und daher der Radar-Reflexionsquerschnitt relativ klein ist.

Bei der Simulation von Hochspannungsdrähten bzw. -leitungen erfolgt die Modellierung des Drahthindernisses durch einen glatten Stab, der wegen seiner Spiegeleigenschaft nur Reflexionssignale bei senkrechtem Auftreffen des Sendesignals bietet. Tatsächlich aber bestehen die für einen Hubschrauber gefährlichen Hochspannungsleitungen aus gewendelten einzelnen Drähten, so dass dicht beieinanderliegende Reflexionspunkte entstehen, die allerdings einen kleinen Reflexionsquerschnitt haben. Das eigentliche Problem besteht darin, dass nicht immer gewährleistet ist, dass in einer Auflösungszelle der Radar-Reflexionsquerschnitt des Hochspannungsseiles größer als der Reflexionsquerschnitt einer drahtfreien Auflösungszelle ist.

Nun wird bei einer herkömmlichen SAR- oder ROSAR-Signalverarbeitung das Empfangssignalgemisch mit einem Referenzsignal kreuzkorreliert, welches die Antwort eines punktförmigen Reflektors bei Bestrahlung desselben mit dem Sendesignal aus der bewegten Sende- und Empfangsantenne ist. Zwar wird dadurch die gesamte Empfangssignalenergie eines Reflexionspunktes über den gesamten Drehwinkelbereich des Rotors fokussiert, aber eben doch nur diejenige Signalenergie, die von einem einzelnen Reflexionspunkt stammt.

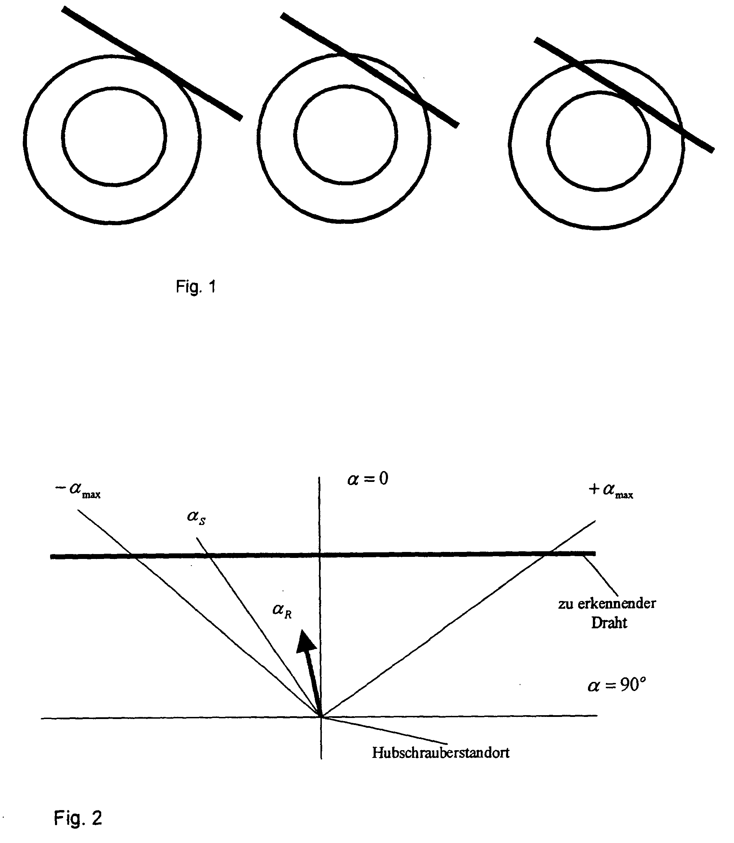

Der Grundgedanke des vorliegenden Lösungsvorschlages besteht darin, dass ein spezielles "Draht-Referenzsignal" konstruiert wird, mit dessen Hilfe es möglich ist, alle Teilsignale, die von einem Drahtabschnitt stammen, zu fokussieren. Dieses Drahtreferenzsignal ist selbstverständlich von der Lage des Drahtes abhängig. Dadurch entsteht eine große Vielfalt von Drahtreferenzsignalen, die alle mit dem Empfangssignal zu korrelieren sind, so dass ein bedenklich großer Rechenaufwand zu bewältigen wäre. Die Vielfalt von Drahtreferenzsignalen wird jedoch sehr eingeschränkt, wenn man sich die spezielle Art wie ein geradliniger Draht, dem sich ein Hubschrauber nähert und in einen ROSAR-Entfernungsring eindringt, zunutze macht (Fig. 1). Die Annäherung an einen Entfernungsring erfolgt bei RO-SAR wegen der Rundumsicht (360°- Blickfeld) in jedem Falle tangential. Parallel dazu erfolgt die weitere Annäherung.

Abweichend von der bekannten ROSAR-Prozessierung erfolgt vorschlagsgemäß die Kreuzkorrelation des Empfangssignals nicht mit dem Punktreferenzsignal entlang dem Drehwinkel in einem einzelnen Entfernungsring, sondern das gesamte Empfangssignal - das aus einem Sektor kommt, in dem sich das Drahthindernis vermutlich befindet, wird mit dem Drahtreferenzsignal korreliert (Fig.2).

Das hier vorgeschlagene Drahterkennungsverfahren läuft beim Beispiel einer ROSAR- Ausgestaltung mit rumpffester Sendeantenne und in der Nähe der Blattspitzen montierter Empfangsantenne, in folgenden Schritten ab: In der Rotorstellung -$\alpha_{R,max}$ wird ein Sendeimpuls ausgesendet und die rückgestreuten Empfangssignale werden unter dem Speicherplatz -$\alpha_{R,max}$ abgespeichert (Fig.2). Inzwischen hat sich der Rotor auf den Winkel $\alpha_R$ weitergedreht und das gleiche Verfahren wird wiederholt bis der Rotor auf +$\alpha_{max}$ steht. Dieses vom Drehwinkel $\alpha$ abhängige Empfangssignal wird mit dem ebenfalls drehwinkelabhängigen Drahtreferenzsignal korreliert.

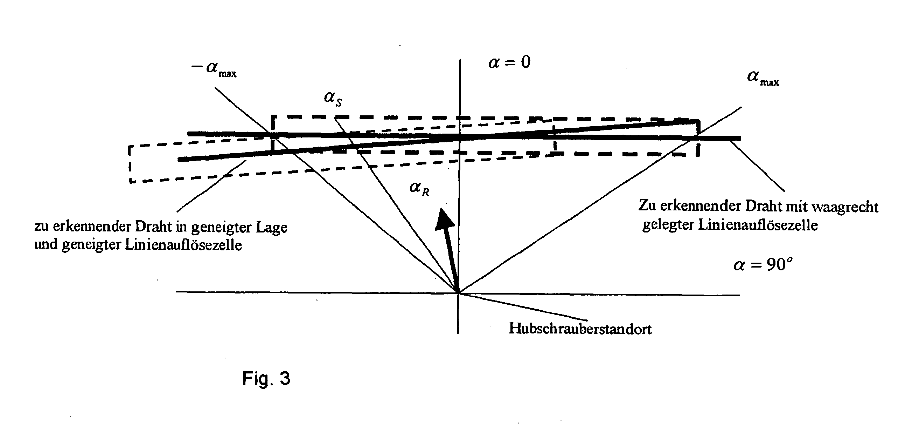

Nun ist es möglich, dass die Cluttersignale zu groß sind. In solchen Fällen wird dann das erfindungsgemäße Verfahren mit der Linienauflösezelle angewendet, dabei wird unter Linienauflösungszelle ein eingrenzender Bereich um die Drahtlinie verstanden, wie in Fig. 3 veranschaulicht. Diese Linienauflösezelle grenzt einen rechteckigen Bereich um die zu erfassende Drahtlinie ab. Nur aus diesem Bereich, der durch die Entfernung $R(\alpha)$ und dem Winkel $\varphi(\alpha)$ beschreibbar ist, werden Empfangssignale empfangen.

Je nach Höhe und Länge der Linienauflösezellen kann man einen zu überwachenden Sektor mit wenigen Linienauflösezellen überstreichen, um Korrelationsaufwand einzusparen. Die Grundidee ist dabei, jeweils die Nachbarlinienauflösezelle so zu legen, dass eine um einen geringen Winkel gegen die Ausgangslinie geneigte Linie in beide Linienauflösezellen zu liegen kommt.

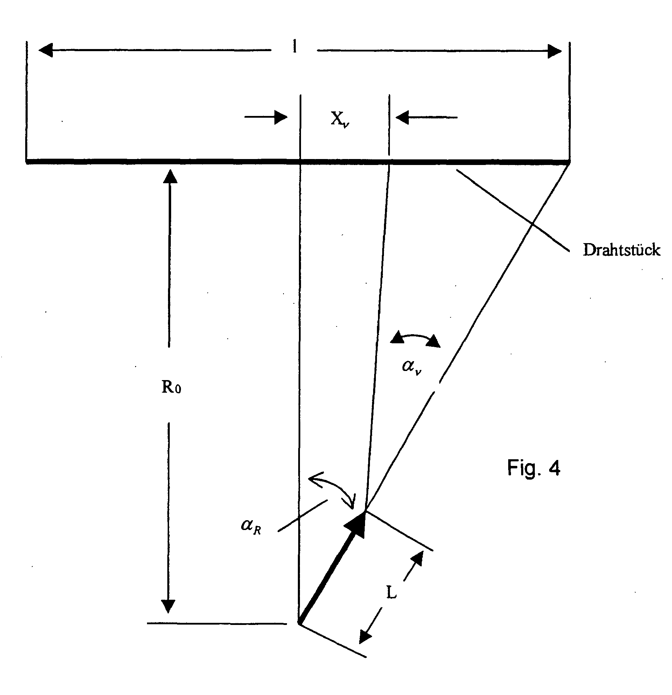

Zur Realisierung des erfindungsgemäß vorgeschlagenen Drahtreferenzsignals werden unter Beachtung der verschiedenen Laufzeiten die Empfangssignale für die einzelnen Reflexionspunkte des Drahtes errechnet, wobei diese Reflexionspunkte geometrisch versetzt auf einer Linie liegen. Danach werden die Teil-Empfangssignale ebenfalls unter Beachtung der verschiedenen Laufzeiten und Dopplerverschiebungen aufgrund der rotierenden Antennen errechnet und zu einem einzigen "Drahtreferenzsignal" zusammengefasst, wie es in Fig. 4 verdeutlicht ist. Beim Vorliegen unregelmäßiger Kreisbewegungen der Sende- und Empfangsantenne kann auch hier eine Optimierung durch Anwendung des Rechenberg-Optimierungsverfahrens bei ROSAR (DE 198 51 910 C1) genutzt werden.

Zweckmäßigerweise werden auf dem zu erkennenden Drahtstück diskrete Reflexionspunkte, die durch ihren Abstand von der Vertikalachse charakterisiert sind, angenommen. Das Referenzsignal $S_{Ds}$ für das Drahtstück besteht somit aus einer Summe von Teilsignalen

$$S_{Ds} = \sum_{\alpha_R=-\alpha_{R\max}}^{\alpha_R=+\alpha_{R\max}} \sum_{v=1}^{n} S_v 2\pi(f_T + \frac{2v}{c} f_T \sin\alpha(x_v))t .$$

Hierbei bedeutet $f_T$ die Trägerfrequenz, d.h. die Sendefrequenz, $v$ ist die Tangentialgeschwindigkeit des Rotors und $c$ die Lichtgeschwindigkeit.

Die Abstände der einzelnen Reflexionspunkte auf dem Drahtstück sind so zu wählen, dass die Teilsignale gemäß Abtasttheorem erfasst werden. Ein fundamentaler Unterschied zwischen einem Punktreferenzsignal und dem hier beschriebenen Drahtstückreferenzsignal ist darin gegeben, dass für jeden Drehwinkel $\alpha_R$ der Antennenstellung jeweils nur ein Empfangssignal mit nur einer diskreten Dopplerverschiebung auftritt, wohingegen beim Drahtreferenzsignal jeweils eine Summe von Signalen verschiedener Frequenz erscheint.

**Patentansprüche**

1.   Verfahren für ein Radarsystem mit synthetischer Apertur durch rotierende Antennen -ROSAR- das pulsfrequent oder im FM-CW-Betrieb arbeitet, zur Erkennung von Drahthindernissen auf der Basis einer ROSAR-Fokussierung ganzer Drahtabschnitte, **dadurch gekennzeichnet, dass** aus der Summe kohärenter Referenzsignale, deren Ausgangspunkte auf einem geraden Drahtabschnitt liegen, jeweils Drahtreferenzsignale ermittelt und kohärent verarbeitet werden, wobei das gesamte Empfangssignal aus einem Sektor mit dem Drahtreferenzsignal korreliert wird.

2.   Verfahren nach Anspruch 1, **dadurch gekennzeichnet, dass** die vom Drehwinkel $\alpha$ der rotierenden Antennen

abhängigen Empfangssignale mit den drehwinkelabhängigen Drahtreferenzsignalen korreliert werden.

3. Verfahren nach Anspruch 1 oder 2, **dadurch gekennzeichnet, dass** im Falle zu großer Cluttersignale ein eingrenzender, vorwiegend rechteckiger Bereich um die Drahtlinie als sogenannte Linienauflösezelle gebildet wird, aus der die Empfangssignale übernommen werden.

4. Verfahren nach einem der Ansprüche 1 bis 3, **dadurch gekennzeichnet, dass** jeweils die Nachbarlinienauflösezellen so angeordnet sind, dass eine um einen geringen Winkel gegen die Ausgangslinie geneigte Linie immer in beide Linienauflösezellen zu liegen kommt.

## Claims

1. Method for a radar system having a synthetic aperture by means of rotating antennas -ROSAR- which operates at a pulse frequency or in the FMCW mode for identification of wire obstructions on the basis of ROSAR focussing on entire wire sections, **characterized in that** wire reference signals are in each case determined from the sum of coherent reference signals whose output points lie on a straight wire section, and these wire reference signals are coherently processed, with the entire received signal from one sector being correlated with the wire reference signal.

2. Method according to Claim 1, **characterized in that** the received signals, which are dependent on the rotation angle $\alpha$ of the rotating antennas, are correlated with the wire reference signals, which are dependent on the rotation angle.

3. Method according to Claim 1 or 2, **characterized in that**, if the clutter signals are excessive, a constraining, predominantly rectangular area is formed around the wire line as a so-called line resolution cell, from which the received signals are taken.

4. Method according to one of Claims 1 to 3, **characterized in that** the adjacent line resolution cells are in each case arranged such that a line which is inclined through a small angle with respect to the initial line is always located in both line resolution cells.

## Revendications

1. Procédé pour un radar à ouverture synthétique par antennes rotatives ROSAR fonctionnant en fréquence d'impulsions ou en mode FM-CW, pour la reconnaissance d'obstacles de câbles sur la base d'une focalisation ROSAR de segments entiers de câbles, **caractérisé en ce qu'**on détermine les signaux de référence de câbles et qu'on les traite respectivement de manière cohérente à partir de la somme de signaux de référence cohérents dont les points de départ se situent sur un segment de câble droit, la totalité du signal de réception d'un secteur étant corrélée avec le signal de référence du câble.

2. Procédé selon la revendication 1, **caractérisé en ce que** les signaux de réception dépendant de l'angle de rotation $\alpha$ de l'antenne rotative sont corrélés avec les signaux de référence des câbles dépendant de l'angle de rotation.

3. Procédé selon la revendication 1 ou 2, **caractérisé en ce que**, dans le cas de signaux de clutter trop grands, on forme un domaine limitatif essentiellement rectangulaire autour de la ligne du câble dit cellule de résolution de lignes à partir de laquelle on prend en charge les signaux de réception.

4. Procédé selon une des revendications 1 à 3, **caractérisé en ce que** les cellules de résolution respectives de lignes adjacentes sont disposées de telle sorte qu'une ligne inclinée d'un petit angle par rapport à la ligne de sortie se trouve toujours dans les deux cellules de résolution des lignes.

Fig. 1

$\alpha = 0$

$-\alpha_{max}$

$+\alpha_{max}$

$\alpha_S$

zu erkennender
Draht

$\alpha_R$

$\alpha = 90°$

Hubschrauberstandort

Fig. 2

$-\alpha_{max}$

$\alpha_S$

$\alpha = 0$

$\alpha_{max}$

$\alpha_R$

zu erkennender Draht in geneigter Lage
und geneigter Linienauflösezelle

Zu erkennender Draht mit waagrecht
gelegter Linienauflösezelle

$\alpha = 90^{\circ}$

Hubschrauberstandort

Fig. 3

EP 1 227 337 B1

Drahtstück

$X_v$

$R_0$

$\alpha_v$

$\alpha_R$

L

Fig. 4